# EUROPEAN PATENT SPECIFICATION

(11) **EP 3 403 815 B1**
(45) Date of publication and mention of the grant of the patent: **24.02.2021**
(21) Application number: 16884937.0
(22) Date of filing: 14.01.2016
(51) Int. Cl.: B29C 43/24, B29C 43/58, B30B 3/00, B21B 31/20, B21B 38/10, B29C 55/18, B29C 43/52, B29C 43/28

(54) **ROLLING DEVICE AND MODIFICATION METHOD FOR ROLLING DEVICE**
WALZVORRICHTUNG UND MODIFIKATIONSVERFAHREN FÜR WALZVORRICHTUNG
DISPOSITIF DE ROULEMENT ET PROCÉDÉ DE MODIFICATION POUR DISPOSITIF DE ROULEMENT

(43) Date of publication of application: 21.11.2018
(73) Proprietor: IHI Corporation, Tokyo 135-8710 (JP); IHI Logistics & Machinery Corporation, Koto-ku Tokyo 135-0061 (JP)
(72) Inventor: OKABE, Michinari, Tokyo 135-0061 (JP); NEAGARI, Naoyuki, Tokyo 135-0061 (JP)
(74) Representative: O'Connor, Dominic David
(86) International application number: PCT/JP2016/051039
(87) International publication number: WO 2017/122334

(56) References cited:
- EP-A1- 3 075 510
- JP-A- H0 655 561
- JP-A- S4 956 657
- JP-A- 2015 169 561
- US-A- 3 861 183
- US-A- 3 936 258
- US-A- 3 936 258

## Description

### Technical Field

The present disclosure relates to a rolling device and a modification method for the rolling device.

### Background Art

Patent Literature 1 discloses a calender configured to supply a material between a pair of rolls and roll the material to manufacture a sheet-like product having a substantially uniform thickness. In order to make the thickness of the product substantially uniform, a gap between the pair of rolls needs to be kept constant. In this regard, in the calender described in Patent Literature 1, the gap between the pair of rolls is measured with a noncontact-type distance sensor. Attention is also drawn to the disclosures of EP3075510A1, which is prior art under Article 54(3) EPC, and US3936258A.

### Citation List

### Patent Literature

Patent Literature 1: Japanese Unexamined Patent Publication No. H6-055561

### Summary of Invention

### Technical Problem

In recent years, in order to improve quality of a product manufactured by rolling a material with a pair of rolls, controlling uniformity of the thickness of the product with higher accuracy has been required.

In this regard, the present disclosure describes a rolling device and a modification method for the rolling device that enable detection of a gap between a pair of rolls with very high accuracy for obtaining a product having a more uniform thickness.

### Solution to Problem

A rolling device according to one aspect of the present invention is as claimed in claim 1.

[DELETED]

A modification method for a rolling device according to another aspect of the present invention is as claimed in claim 9.

### Effects of Invention

According to the rolling device and the modification method for the rolling device of the present disclosure, a gap between a pair of rolls can be detected with very high accuracy.

### Brief Description of Drawings

FIG. 1 is a side view illustrating a schematic configuration of a calender.
FIG. 2 is a side view schematically illustrating mainly a relation between rolls and sensor units in the calender in FIG. 1.
FIG. 3(a) illustrates an outline of a pair of rolls when viewed from an oblique direction, and FIG. 3(b) illustrates a state in which the pair of rolls overlap each other.
FIG. 4(a) schematically illustrates end parts of the pair of rolls when viewed from the side, and FIG. 4(b) schematically illustrates the end parts of the pair of rolls when viewed from above.
FIG. 5(a) illustrates a cross-section of a sensor unit, and FIG. 5(b) illustrates a cross-section thereof taken along line B-B in FIG. 5(a).
FIG. 6 is a perspective view illustrating another example of the sensor unit.
FIG. 7 is a diagram illustrating an outline of the pair of rolls from an oblique direction.
FIG. 8(a) schematically illustrates end parts of the pair of rolls when viewed from the side, and FIG. 8(b) schematically illustrates the end parts of the pair of rolls when viewed from above.
FIG. 9 is a side view illustrating a schematic configuration of a calender according to another example.
FIG. 10 is a side view schematically illustrating mainly a relation between rolls and sensor units in the calender in FIG. 9.

### Description of Embodiments

[DELETED]

### [1] Overview of Embodiment

A rolling device according to the one aspect of the present invention is as claimed in claim 1.

In the rolling device according to the one aspect of the present invention, the sensor unit is interposed between the first axle box and the second axle box, and is in contact with both of the axle boxes. The sensor unit includes the distance sensor including the extension/contraction portion configured to extend and contract in the one direction in which the first and second axle boxes are aligned. Thus, when the first axle box moves toward the second axle box, the extension/contraction portion contracts in the one direction by the length of the move. When the first axle box separate from the second axle box, the extension/contraction portion extends in the one direction by the length of the separation. In this manner, the sensor unit can directly measure the movement amount of the first and second axle boxes in the one direction as the extension/contraction amount of the extension/contraction portion. Thus, by using the sensor unit, a gap between this pair of rolls can be detected with very high accuracy.

The two sensor units may be disposed such that a virtual straight line connecting the shaft of the first roll and the shaft of the second roll is positioned between the two sensor units. In this case, even if one of the first and second axle boxes is inclined with respect to the other, the gap between the pair of rolls can be detected with very high accuracy by using, for example, the average of two extension/contraction amounts measured by the two sensor units.

Each sensor unit may further include a first member holding the distance sensor and a second member abutting on the extension/contraction portion and attached to the first member slidably along the one direction. In this case, when the first axle box moves toward the second axle box, the second member slides in the one direction by the length of the move, and the extension/contraction portion accordingly contracts in the one direction. When the first axle boxes separate from the second axle box, the second member slides in the one direction by the length of the separation, and the extension/contraction portion accordingly extends in the one direction.

One of the first and second members may be fixed to one of the first and second axle boxes. The other of the first and second members may be not fixed to the other of the first and second axle boxes, and may have a contact surface that is movable within a surface of the other of the first and second axle boxes while abutting on this surface. In this case, even if one of the first and second rolls moves so as to be displaced with respect to the other in a virtual plane orthogonal to the one direction, the contact surface also moves, following that movement, within the surface of the other of the first and second axle boxes while abutting on this surface. Thus, occurrence of a load on the sensor unit in a direction along the virtual plane can be suppressed. Because the extension/contraction direction of the extension/contraction portion is kept in the one direction, even when the above-described displacement occurs between the first and second rolls, the gap between the pair of rolls can be detected with very high accuracy.

In the first and second axle boxes, surface roughness of a contact surface of the first and second axle boxes, which the contact surface is in contact with the extension/contraction portion, may be equal to or smaller than Ra 1.6. In this case, the extension/contraction portion can easily slide on the contact surface. Thus, the extension/contraction portion follows the movement of the first or second axle box to extend and contract more accurately, whereby the gap between the pair of rolls can be detected with higher accuracy.

The sensor unit may further include a supply path for supplying cooling gas to the distance sensor. The first and second rolls are heated during operation of the rolling device, and an output value from the distance sensor may fluctuate due to temperature drift when the distance sensor is heated by the heat. However, in the above-described case, the distance sensor can be cooled by the cooling gas through the supply path. Thus, the gap between the pair of rolls can be detected with higher accuracy.

The first axle box and the second axle box may each have a fixture, and the sensor unit may be interposed between the first and second axle boxes and be in contact with both of the axle boxes via the respective fixtures of the first axle box and the second axle box. In this case, the sensor unit can be attached at a desired position depending on positions of the fixtures. Thus, the sensor unit can be accessed more easily than when the sensor unit is positioned between the first and second axle boxes. Thus, operations such as maintenance, attachment, and removal of the sensor unit can be easily performed.

In the one aspect of the present invention, the shaft of the first roll is rotatably supported by a first bearing incorporated in the first axle box, and the shaft of the second roll is rotatably supported by a second bearing incorporated in the second axle box. The two sensor units are disposed in positions that are substantially symmetrical about a central point of the first and second bearings when viewed from the one direction. In this case, even if one of the first and second axle boxes is inclined with respect to the other, the gap between the pair of rolls can be detected with high accuracy by calculating, for example, the average of the extension amount of the extension/contraction portion at one of the sensor units and the contraction amount of the extension/contraction portion at the other of the sensor units.

A distal end of each extension/contraction portion may have a spherical shape. In this case, the distal end of the extension/contraction portion is in point-contact with the first or second axle box, which reduces a measurement error of the gap significantly even if the extension/contraction portion is inclined with respect to the one direction. Thus, the gap between the pair of rolls can be detected with still higher accuracy.

[DELETED]

[DELETED]

[DELETED]

[DELETED]

[DELETED]

[DELETED]

A modification method for a rolling device according to the other aspect of the present invention is as claimed in claim 9.

In the modification method for the rolling device according to this other aspect of the present embodiment, the sensor unit is interposed between the respective fixtures each provided to the first and second axle boxes such that the sensor unit is in contact with the respective fixtures and the extension/contraction portion included in the sensor unit extends and contracts in the one direction in which the first and second axle boxes are aligned. Thus, when the first axle box moves toward the second axle box, the extension/contraction portion contracts in the one direction by the length of the move. When the first axle box separate from the second axle box, the extension/contraction portion extends in the one direction by the length of the separation. In this manner, the sensor unit can directly measure the movement amount of the first and second axle boxes in the one direction as the extension/contraction amount of the extension/contraction portion. Thus, by using the sensor unit, a gap between the pair of rolls can be detected with very high accuracy.

In the modification method for the rolling device according to this other aspect of the present embodiment, the fixtures are each provided to the first and second axle boxes, and then the sensor unit is interposed between the respective fixtures. Thus, the sensor unit can be attached at a desired position depending on positions of the fixtures. Thus, attachment of the sensor unit (modification work for the rolling device) can be performed more easily than when the sensor unit is attached directly between the first and second axle boxes.

### [2] Example of Embodiment

An embodiment according to the present disclosure described below is an example for describing the present invention, and thus the present invention should not be limited to the following description. One example of a calender 1 (rolling device) of an embodiment according to the present disclosure will be described hereinafter in more detail with reference to the drawings. In the following description, the same elements or the elements having the same function are denoted with the same reference signs, and an overlapping description may be omitted. Dimensional ratios of the respective elements are not limited to the illustrated ratios.

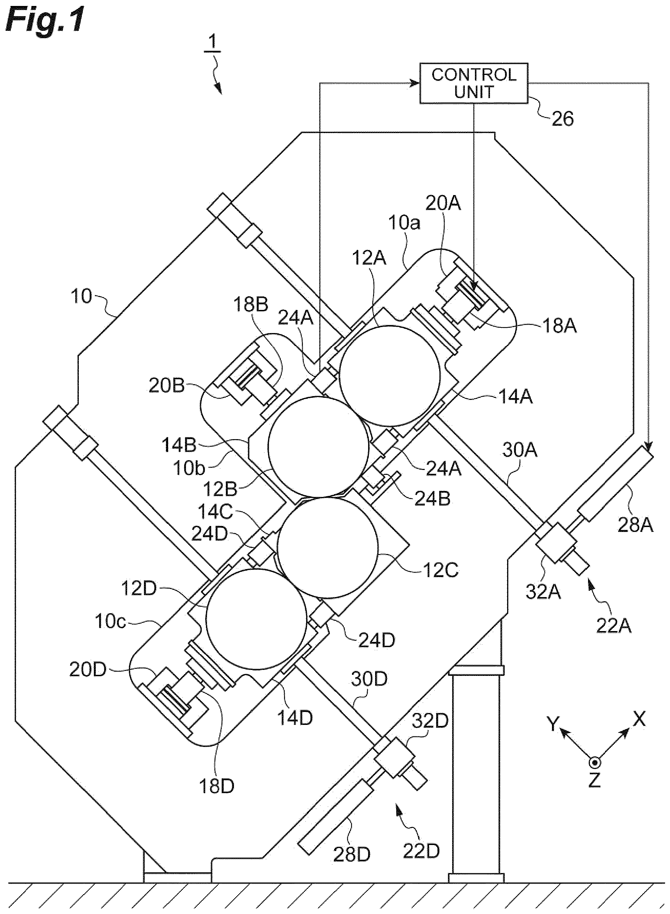

As depicted in FIG. 1, the calender 1 includes a frame 10, rolls 12A to 12D, axle boxes 14A to 14D, hydraulic cylinders (adjustment units) 18A, 18B, and 18D, roll-cross mechanisms 22A and 22D, sensor units (measuring means) 24A, 24B, and 24D, and a control unit (controller) 26.

The frame 10 is installed on a floor. The frame 10 has openings 10a to 10c. The opening 10a extends along an X direction inclined with respect to the floor when viewed from the side. The opening 10b extends along a Y direction orthogonal to the X direction when viewed from the side. The opening 10b crosses the opening 10a. The opening 10c extends along the X direction toward an opposite side of the opening 10a with respect to the opening 10b, but is not positioned on the same straight line on which the opening 10a is positioned. The opening 10c crosses the opening 10b.

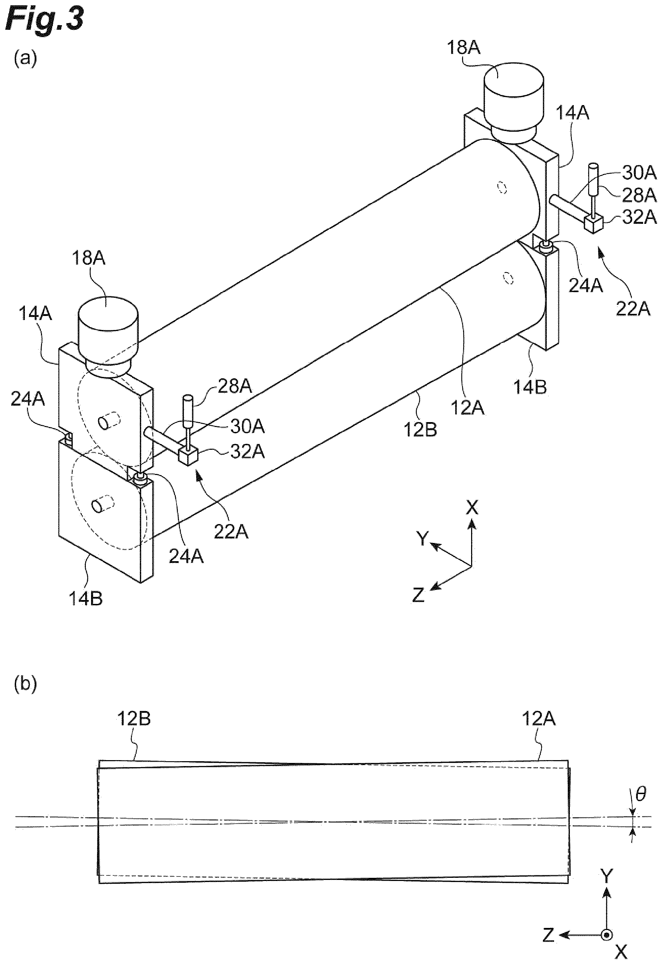

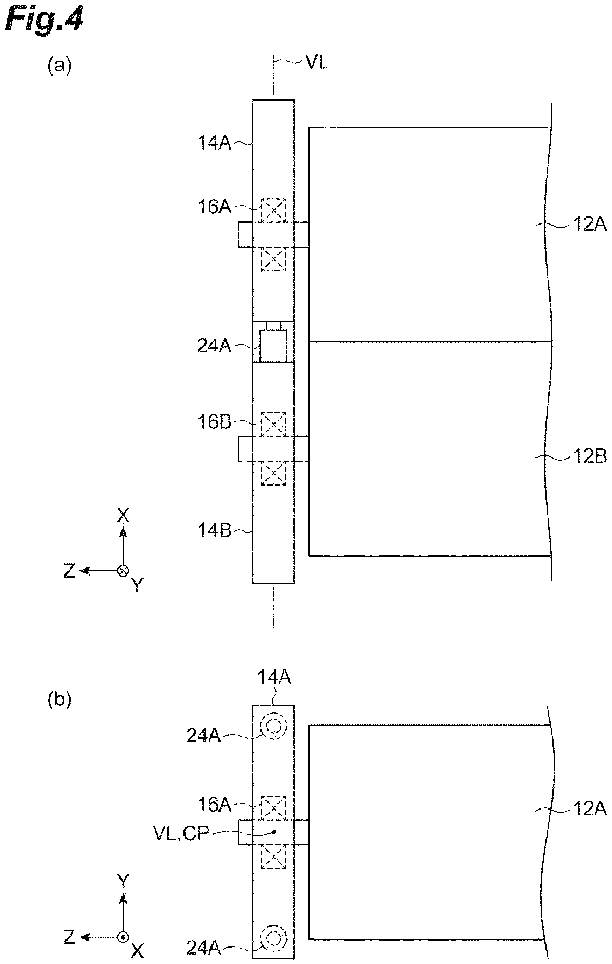

The roll 12A (first roll) is disposed within the opening 10a. The roll 12A has a cylindrical shape. The roll 12A extends in a Z direction (direction vertical to the paper plane of FIG. 1) orthogonal to both of the X direction and the Y direction. The roll 12A is rotatably supported by a pair of the axle boxes 14A via a shaft portion extending along an axial direction of the roll 12A from both ends (see FIG. 3(a)). Specifically, the roll 12A is rotatably supported by a bearing 16A (first bearing) incorporated in each axle box 14A (see FIG. 4). The pair of axle boxes 14A is attached to the frame 10 via a slider (not depicted) within the opening 10a. This allows the roll 12A to move in the extending direction of the opening 10a (X direction) within the opening 10a.

The hydraulic cylinder 18A is attached to the frame 10 via a housing 20A. The hydraulic cylinder 18A is positioned at an end part of the opening 10a, the end part being distant from the openings 10b and 10c in the X direction. A piston of the hydraulic cylinder 18A is connected to an end edge of the axle box 14A, the end edge being positioned on a side opposite to the axle box 14B in the X direction. The hydraulic cylinder 18A pushes and pulls the roll 12A in the X direction via the axle box 14A on the basis of a signal from the control unit 26.

The roll-cross mechanism 22A includes a motor 28A, a shaft 30A, and a gearbox 32A. The motor 28A is attached to the outside of the frame 10. The shaft 30A extends from the outside of the frame 10 toward the opening 10a along the Y direction. A distal end of the shaft 30A is connected to a side edge of the axle box 14A, the side edge extending in the X direction. The gearbox 32A converts rotational motion of the motor 28A into linear motion of the shaft 30A in the Y direction. Thus, based on a signal from the control unit 26, the motor 28A moves the shaft 30A forward and backward in the Y direction to push and pull the axle box 14A in the Y direction. Consequently, when viewed from a direction in which the adjacent rolls 12A and 12B are aligned (X direction), the roll 12A is inclined by a predetermined angle θ with respect to the roll 12B (see FIG. 3(b)).

After the roll 12A is inclined with respect to the roll 12B, when a material is not supplied to the calender 1, a gap between the rolls 12A and 12B is narrower at central parts of the rolls 12A and 12B, and is wider at both end parts of the rolls 12A and 12B. When a material is supplied between the rolls 12A and 12B, the gap at the central parts of the rolls 12A and 12B are expanded, whereby the central parts of the rolls 12A and 12B are bent outward. Thus, by adjusting the inclined angle θ of the roll 12A with respect to the roll 12B and the amount of the material supplied between the rolls 12A and 12B, the gap between the rolls 12A and 12B can be set substantially constant. Consequently, the material can be formed to have a substantially uniform thickness after the material passes through between the rolls 12A and 12B to be rolled.

The roll 12B (second roll) is disposed within the opening 10b. The roll 12B has a cylindrical shape. The roll 12B extends in the Z direction (direction vertical to the paper plane of FIG. 1). The roll 12B is rotatably supported by a pair of the axle boxes 14B via a shaft portion extending along an axial direction of the roll 12B from both ends (see FIG. 3(a)). Specifically, the roll 12B is rotatably supported by a bearing 16B (second bearing) incorporated in each axle box 14B (see FIG. 4). The pair of axle boxes 14B is attached to the frame 10 via a slider (not depicted) within the opening 10b. This allows the roll 12B to move in the extending direction of the opening 10b (Y direction) within the opening 10b. The pair of axle boxes 14B is adjacent to the pair of axle boxes 14A in the X direction.

The hydraulic cylinder 18B is attached to the frame 10 via a housing 20B. The hydraulic cylinder 18B is positioned at an end part of the opening 10b, the end part being distant from the openings 10a and 10c in the Y direction. A piston of the hydraulic cylinder 18B is connected to an end edge of the axle box 14B, the end edge being positioned on a side opposite to the axle box 14C in the Y direction. The hydraulic cylinder 18B pushes and pulls the roll 12B in the Y direction via the axle box 14B on the basis of a signal from the control unit 26.

The roll 12C is disposed within the opening 10c. The roll 12C has a cylindrical shape. The roll 12C extends in the Z direction (direction vertical to the paper plane of FIG. 1). The roll 12C is rotatably supported by a pair of the axle boxes 14C via a shaft portion extending along an axial direction of the roll 12C from both ends. Specifically, the roll 12C is rotatably supported by a bearing (not depicted) incorporated in each axle box 14C. The pair of axle boxes 14C is positioned at an end part of the opening 10c, the end part being close to the openings 10a and 10b, and is fixed within the opening 10c. Thus, the roll 12C does not move within the opening 10c. The pair of axle boxes 14C is adjacent to the pair of axle boxes 14B in the Y direction.

The roll 12D is disposed within the opening 10c. The roll 12D has a cylindrical shape. The roll 12D extends in the Z direction (direction vertical to the paper plane of FIG. 1) orthogonal to both of the X direction and the Y direction. The roll 12D is rotatably supported by a pair of the axle boxes 14D via a shaft portion extending along an axial direction of the roll 12D from both ends. Specifically, the roll 12D is rotatably supported by a bearing (not depicted) incorporated in each axle box 14D. The pair of axle boxes 14D is attached to the frame 10 via a slider (not depicted) within the opening 10c. This allows the roll 12D to move in the extending direction of the opening 10c (X direction) within the opening 10c. The pair of axle boxes 14D is adjacent to the pair of axle boxes 14C in the X direction.

The hydraulic cylinder 18D is attached to the frame 10 via a housing 20D. The hydraulic cylinder 18D is positioned at an end part of the opening 10c, the end part being distant from the openings 10a and 10b in the X direction. A piston of the hydraulic cylinder 18D is connected to an end edge of the axle box 14D, the end edge being positioned on a side opposite to the axle box 14C in the X direction. The hydraulic cylinder 18D pushes and pulls the roll 12D in the X direction via the axle box 14D on the basis of a signal from the control unit 26.

The roll-cross mechanism 22D includes a motor 28D, a shaft 30D, and a gearbox 32D. The motor 28D is attached to the outside of the frame 10. The shaft 30D extends from the outside of the frame 10 toward the opening 10c along the Y direction. A distal end of the shaft 30D is connected to a side edge of the axle box 14D, the side edge extending in the X direction. The gearbox 32D converts rotational motion of the motor 28D into linear motion of the shaft 30D in the Y direction. Thus, based on a signal from the control unit 26, the motor 28D moves the shaft 30D forward and backward in the Y direction to push and pull the axle box 14D in the Y direction. Consequently, when viewed from a direction (X direction) in which the adjacent rolls 12C and 12D are aligned, the roll 12D is inclined by a predetermined angle with respect to the roll 12C.

After the roll 12D is inclined with respect to the roll 12C, when a material is not supplied to the calender 1, a gap between the rolls 12C and 12D is narrower at central parts of the rolls 12C and 12D, and is wider at both end parts of the rolls 12C and 12D. When a material is supplied between the rolls 12C and 12D, the gap at the central parts of the rolls 12C and 12D is expanded, whereby the central parts of the rolls 12C and 12D are bent outward. Thus, by adjusting the inclined angle of the roll 12D with respect to the roll 12C and the amount of the material supplied between the rolls 12C and 12D, the gap between the rolls 12C and 12D can be set substantially constant. Consequently, the material can be formed to have a substantially uniform thickness after the material passes through between the rolls 12C and 12D to be rolled.

The sensor unit 24A is interposed between the axle box 14A and the axle box 14B, and is in contact with both of the axle boxes 14A and 14B (see FIG. 1 to FIG. 4). Two sensor units 24A are disposed between the axle box 14A and the axle box 14B so as to be aligned in the Y direction. The two sensor units 24A are disposed such that a virtual straight line VL (see FIG. 4) connecting the shaft of the roll 12A and the shaft of the roll 12B is positioned between the two sensor units 24A. The two sensor units 24A are disposed in positions that are substantially symmetrical about a central point CP of the bearings 16A and 16B when viewed from the X direction (extending direction of the virtual straight line VL) (see FIG. 4(b)). In the present embodiment, the positions where the two sensor units 24A are disposed are also positions that are substantially symmetrical about a line of the shafts of the rolls 12A and 12B (see the same drawing).

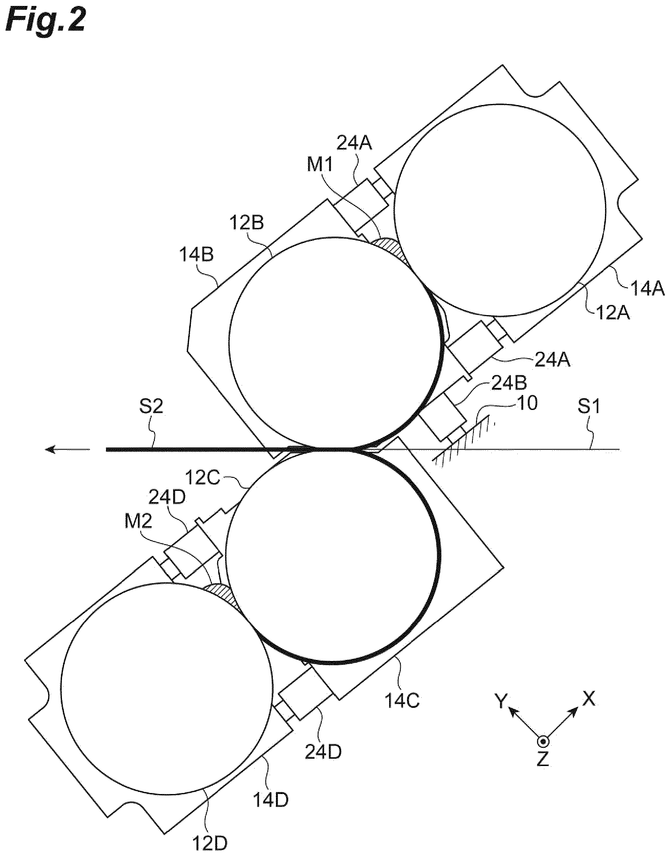

The sensor unit 24B is interposed between the axle box 14B and the frame 10, and is in contact with both of the axle box 14B and the frame 10 (see FIG. 1 and FIG. 2). The sensor unit 24B is positioned at a side edge of the axle box 14B, the side edge being on a side opposite to the hydraulic cylinder 18B in the Y direction.

The sensor unit 24D is interposed between the axle box 14C and the axle box 14D, and is in contact with both of the axle boxes 14C and 14D (see FIG. 1 and FIG. 2). Two sensor units 24D are disposed between the axle box 14C and the axle box 14D so as to be aligned in the Y direction. The two sensor units 24D are disposed such that a virtual straight line connecting the shaft of the roll 12C and the shaft of the roll 12D is positioned between the two sensor units 24D. The two sensor units 24D are disposed in positions that are substantially symmetrical about a central point of the respective bearings incorporated in the axle boxes 14C and 14D when viewed from the X direction. In the present embodiment, the positions where the two sensor units 24D are disposed are positions that are substantially symmetrical also about a line of the shafts of the rolls 12C and 12D.

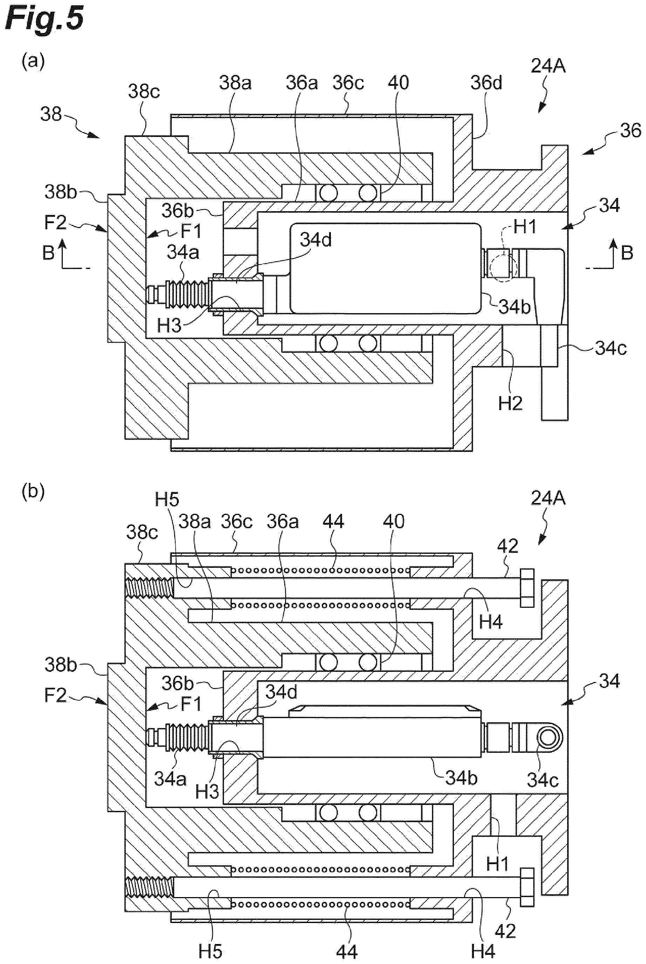

Configurations of the sensor units 24A, 24B, and 24D will be described in more detail. The configurations of the sensor units 24A, 24B, and 24D are similar, and thus the following describes the configuration of the sensor unit 24A with reference to FIG. 5, and description of the other sensor units 24B and 24D is omitted.

The sensor unit 24A includes a distance sensor 34, a case (first member) 36, a case (second member) 38, a guide member 40, two bolts 42, and two coil springs 44. The distance sensor 34 includes an extension/contraction portion 34a and a sensor body portion 34b. The extension/contraction portion 34a can extend and contract in its length direction (left-right direction in FIG. 5). The extension/contraction portion 34a contracts when external force is applied in its length direction, and is restored to the original length when the force is removed. The sensor body portion 34b is connected to the extension/contraction portion 34a via a coupling member 34d having a cylindrical shape. The sensor body portion 34b converts an extension/contraction amount of the extension/contraction portion 34a into an electric signal. In the sensor unit 24A, an extension/contraction direction of the extension/contraction portion 34a is a direction in which the axle boxes 14A and 14B are adjacent to each other (X direction).

The case 36 has an inner cylindrical portion (first member) 36a, a bottom wall (first member) 36b, an outer cylindrical portion 36c, and connecting wall 36d. The inner cylindrical portion 36a houses the sensor body portion 34b. In a side wall of the inner cylindrical portion 36a, two through holes (supply paths) H1 and H2 are formed at different positions. One end of the inner cylindrical portion 36a is fixed to one of the axle boxes 14A and 14B.

The through hole H1 (supply means) is connected to a gas supply source (supply means) (not depicted). From the through hole H1, cooling gas (e.g., air) is introduced into the inner cylindrical portion 36a. From the through hole H2, the cooling gas that has exchanged heat with the sensor body portion 34b in the inner cylindrical portion 36a is discharged. The temperature of the cooling gas (air) supplied to the inner cylindrical portion 36a may be around a room temperature. The sensor body portion 34b may be cooled by the cooling gas to the extent the temperature of the sensor body portion 34b becomes below 40°C. The through hole H2 is also used to take a signal line 34c connected to the sensor body portion 34b out of the sensor unit 24A.

The bottom wall 36b closes the other end of the inner cylindrical portion 36a. In the bottom wall 36b, a through hole H3 through which the inside and the outside of the inner cylindrical portion 36a communicate with each other is formed. The coupling member 34d is disposed through the through hole H3 such that the extension/contraction portion 34a is positioned outside the inner cylindrical portion 36a and the sensor body portion 34b is positioned inside the inner cylindrical portion 36a. Thus, the coupling member 34d is supported by the through hole H3. In other words, the distance sensor 34 is held by the inner cylindrical portion 36a.

The outer cylindrical portion 36c is positioned outside the inner cylindrical portion 36a, and extends on the same axis as that of the inner cylindrical portion 36a. The connecting wall 36d connects the inner cylindrical portion 36a and the outer cylindrical portion 36c. In the connecting wall 36d, four through holes H4 extending in the extension/contraction direction of the extension/contraction portion 34a are formed.

The case 38 has a cylindrical portion (second member) 38a, a bottom wall (second member) 38b, and a flange portion 38c. The cylindrical portion 38a is positioned between the inner cylindrical portion 36a and the outer cylindrical portion 36c. The cylindrical portion 38a extends on the same axis as that of the inner cylindrical portion 36a and the outer cylindrical portion 36c.

The bottom wall 38b closes one end of the cylindrical portion 38a. A distal end of the extension/contraction portion 34a abuts on an inner surface F1 of the bottom wall 38b, the inner surface F1 facing the inner cylindrical portion 36a. An outer surface F2 of the bottom wall 38b, which is not fixed to the other of the axle boxes 14A and 14B, is a contact surface that is movable within a surface of the other of the axle boxes 14A and 14B while abutting on this surface.

The flange portion 38c has an annular shape, and extends toward the outside of the cylindrical portion 38a. In the flange portion 38c, four through holes H5 extending in the extension/contraction direction of the extension/contraction portion 34a are formed. Each of the through holes H5 overlaps the corresponding through hole H4 when viewed from the extension/contraction direction of the extension/contraction portion 34a.

The guide member 40 is interposed between an outer peripheral surface of the inner cylindrical portion 36a and an inner peripheral surface of the cylindrical portion 38a. The guide member 40 rotatably supports the cylindrical portion 38a with respect to the inner cylindrical portion 36a, and also supports the cylindrical portion 38a in a guidable manner with respect to the inner cylindrical portion 36a in the extension/contraction direction of the extension/contraction portion 34a. Thus, the cylindrical portion 38a (case 38) is attached to the inner cylindrical portion 36a (case 36) via the guide member 40.

The bolts 42 are disposed through the respective through holes H4 and H5. The distal end of each bolt 42 is screwed with the flange portion 38c. Thus, the bolts 42 have a function of guiding the cylindrical portion 38a with respect to the inner cylindrical portion 36a in the extension/contraction direction of the extension/contraction portion 34a.

The coil springs 44 are disposed such that the respective bolts 42 are disposed therethrough. The coil springs 44 are disposed between the connecting wall 36d and flange portion 38c. The coil springs 44 apply biasing force between the connecting wall 36d and the flange portion 38c in a direction in which the connecting wall 36d and the flange portion 38c separate from each other.

The sensor unit 24A having the above-described configuration is disposed between the axle boxes 14A and 14B in a state in which the extension/contraction portion 34a is caused to contract by a predetermined amount and not to completely contract (hereinafter called a "reference state"). Thus, when a separation distance between the axle boxes 14A and 14B is increased, the extension/contraction portion 34a extends accordingly. Consequently, the distance sensor 34 detects the extension amount of the extension/contraction portion 34a relative to the reference state, and calculates the gap between the adjacent rolls 12A and 12B on the basis of this extension amount. When the separation distance between the axle boxes 14A and 14B is reduced, the extension/contraction portion 34a contracts accordingly. Consequently, the distance sensor 34 detects the contraction amount of the extension/contraction portion 34a relative to the reference state, and calculates the gap between the adjacent rolls 12A and 12B on the basis of this contraction amount. In this manner, based on the extension/contraction amount of the extension/contraction portion 34a, the distance sensor 34 measures the gap between the adjacent rolls 12A and 12B.

Referring back to FIG. 1, the control unit 26 includes one or more controlling computers to control the calender 1. The control unit 26 has a processing unit (not depicted) configured to execute a control process for each component of the calender 1 on the basis of a control condition and a reading unit (not depicted) configured to read a program from a computer-readable recording medium. The program stored in the recording medium is a program for causing the control process for each component of the calender 1. Examples of the recording medium may include a semiconductor memory, an optical recording disk, a magnetic recording disk, and a magneto-optical disk.

Specifically, the control unit 26 controls the calender 1 to roll, with the rolls 12B and 12C, a sheet-like substrate S1 together with a material M1 supplied between the rolls 12A and 12B and a material M2 supplied between the rolls 12C and 12D, thereby causing the calender 1 to manufacture a sheet-like product S2 in which films of the materials M1 and M2 are formed on the respective surfaces of the substrate S1 (see FIG. 2). At this time, based on a signal from the distance sensor 34, the control unit 26 controls the respective hydraulic cylinders 18A, 18B, and 18D such that the gap between the adjacent rolls 12A and 12B, the gap between the adjacent rolls 12B and 12C, and the gap between the adjacent rolls 12C and 12D become constant.

For example, when the gap between the adjacent rolls 12A and 12B measured by the distance sensor 34 is smaller than a target value, the axle box 14A is pulled toward the hydraulic cylinder 18A such that the roll 12A separates from the roll 12B. When the gap between the adjacent rolls 12A and 12B measured by the distance sensor 34 is larger than the target value, the axle box 14A is pushed by the hydraulic cylinder 18A such that the roll 12A approaches the roll 12B.

In the present embodiment described above, the sensor unit 24A is interposed between the axle box 14A and the axle box 14B, and is in contact with both of the axle boxes 14A and 14B. The sensor unit 24A includes: the distance sensor 34 including the extension/contraction portion 34a configured to extend and contract in one direction (X direction) in which the axle boxes 14A and 14B are aligned; the case 36 holding the distance sensor 34; and the case 38 abutting on the extension/contraction portion 34a and attached to the case 36 slidably along the one direction. Thus, when the axle boxes 14A and 14B approach each other, the case 38 slides in the one direction by the length of the approach, and the extension/contraction portion 34a accordingly contracts in the one direction. When the axle boxes 14A and 14B separate from each other, the case 38 slides in the one direction by the length of the separation, and the extension/contraction portion 34a accordingly extends in the one direction. In this manner, the sensor unit 24A can directly measure the movement amount of the axle boxes 14A and 14B in the one direction as the extension/contraction amount of the extension/contraction portion 34a. Thus, by using the sensor unit 24A, the gap between the rolls 12A and 12B can be detected with very high accuracy. Specifically, when a noncontact-type distance sensor described in Patent Literature 1 is used, accuracy is equal to or higher than 10 µm, for example. In contrast, when the movement amount of the axle boxes 14A and 14B in the one direction is directly measured as the extension/contraction amount by using the extension/contraction portion 34a, the accuracy is about 1 µm, for example. Consequently, the control unit 26 controls the hydraulic cylinder 18A on the basis of this extension/contraction amount, whereby control with very high accuracy is performed for the gap between the rolls 12A and 12B.

In the present embodiment, the two sensor units 24A are disposed such that the virtual straight line connecting the shaft of the roll 12A and the shaft of the roll 12B is positioned between the two sensor units 24A. In the present embodiment in particular, the two sensor units 24A are disposed at positions that are substantially symmetrical about the central point CP of the bearings 16A and 16B when viewed from the one direction (X direction). Thus, even if one of the axle boxes 14A and 14B is inclined with respect to the other, the gap between the rolls 12A and 12B can be detected with very high accuracy by using, for example, the average of two extension/contraction amounts measured by the two sensor units 24A.

In the present embodiment, the inner cylindrical portion 36a (case 36) is fixed to the axle box 14A. The bottom wall 38b (case 38) is not fixed to the axle box 14B, and has the outer surface F2 that is movable within a surface of the axle box 14B while abutting on this surface. Thus, even if one of the rolls 12A and 12B moves so as to be displaced with respect to a virtual plane orthogonal to the one direction (the extension/contraction direction of the extension/contraction portion 34a), the outer surface F2 also moves, following that movement, within the surface of the axle box 14B while abutting on this surface. Thus, occurrence of a load on the sensor unit 24A in a direction along the virtual plane can be suppressed. Because the extension/contraction direction of the extension/contraction portion 34a is kept in the one direction, even when the above-described displacement occurs between the rolls 12A and 12B, the gap between the rolls 12A and 12B can be detected with very high accuracy.

The rolls 12A and 12B are heated during operation of the calender 1, and if the distance sensor 34 is heated by this heat, an output value from the distance sensor 34 may fluctuate due to temperature drift. However, in the present embodiment, as supply paths for supplying cooling gas to the distance sensor 34 (sensor body portion 34b), the through holes H1 and H2 are formed in the inner cylindrical portion 36a. Thus, the distance sensor 34 can be cooled by the cooling gas through the through holes H1 and H2. Thus, the gap between the rolls 12A and 12B can be detected with higher accuracy.

Although the present embodiment has been described above in detail, the present invention is not limited to the above-described embodiment. For example, one of the cases 36 and 38 may be fixed to one of the axle boxes 14A and 14B, and the other of the cases 36 and 38 may be not fixed to the other of the axle boxes 14A and 14B and may have a contact surface that is movable within a surface of the other of the axle boxes 14A and 14B while abutting on this surface.

Between a pair of adjacent axle boxes, at least one sensor unit may be interposed.

When heat is hardly generated around the distance sensor 34 during operation of the device, the sensor unit 24A may not include the supply paths for cooling the distance sensor 34.

Instead of cooling the distance sensor with cooling gas through the through holes H1 and H2, the cases 36 and 38 may be formed with a heat-insulating material, for example. In this case, heat applied to the distance sensor 34 can be reduced, whereby the influence of the temperature drift can be suppressed. Thus, the gap between the rolls 12A and 12B can be detected with higher accuracy.

The calender 1 may include a pressure converter configured to convert pressures that the hydraulic cylinders 18A, 18B, and 18D receive from the rolls 12A, 12B, and 12D, respectively, into electric signals.

The distal end of each extension/contraction portion 34a may be provided with a hemispherical object or a spherical object. In other words, the distal end of the extension/contraction portion 34a may have a spherical shape protruding outward. In this case, the distal end of the extension/contraction portion 34a is in point-contact with the corresponding axle box, which reduces a measurement error of the gap significantly even if the extension/contraction portion 34a is inclined with respect to the one direction (X direction). Thus, the gap between the pair of rolls can be detected with still higher accuracy. Alternatively, the distal end of the extension/contraction portion 34a may have a flat shape, and a region of the axle box with which the distal end of the extension/contraction portion 34a is in contact may have a spherical shape protruding outward.

The sensor units 24A, 24B, and 24D may not include the cases 36 and 38. Specifically, the distance sensor 34 may be directly disposed between the axle boxes 14A and 14B, between the axle boxes 14C and 14D, or between the axle box 14B and the frame 10. In this case, the distal end of the extension/contraction portion 34a is in direct contact with the corresponding axle box.

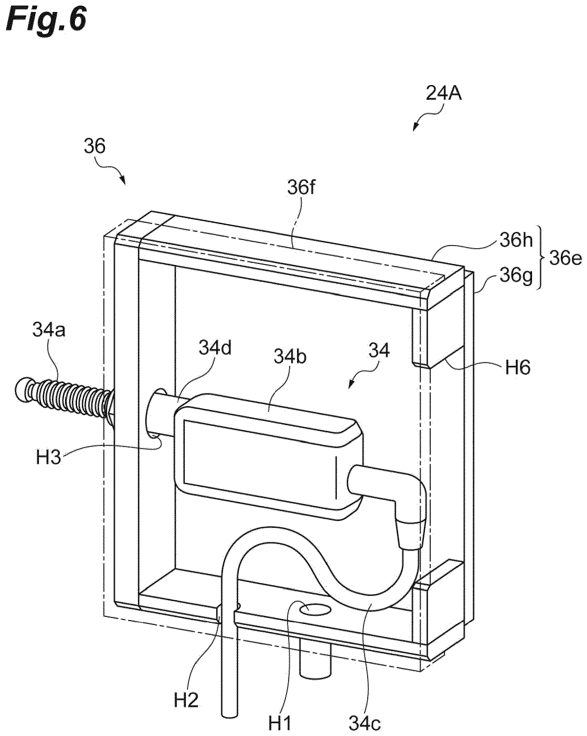

The sensor units 24A, 24B, and 24D may not include the case 38 on a side with which the distal end of the extension/contraction portion 34a is in contact. Specifically, as depicted in FIG. 6, the sensor units 24A, 24B, and 24D each include the distance sensor 34 (measuring means) and a case 36. The case 36 includes a base portion 36e and a lid portion 36f. The base portion 36e is a bottomed container, and has a bottom wall 36g having a rectangular shape and a side wall 36h extending along peripheral edges of the bottom wall 36g. In the side wall 36h, through holes H1 to H3 and a cut-off portion H6 are formed at respective predetermined positions. The lid portion 36f is configured to be attachable to the base portion 36e. Being attached to the base portion 36e, the lid portion 36f faces the bottom wall 36g and covers an open end side of the side wall 36h.

The through hole H1 (supply means) is connected to a gas supply source (supply means) (not depicted). From the through hole H1, cooling gas (e.g., air) is introduced into the case 36. The through hole H2 is used to take the signal line 34c connected to the sensor body portion 34b out of the sensor unit 24A. From a clearance between the through hole H2 and the signal line 34c and from the cut-off portion H6, the cooling gas that has exchanged heat with the sensor body portion 34b in the case 36 is discharged. The coupling member 34d is disposed through the through hole H3 such that the extension/contraction portion 34a is positioned outside the case 36 and the sensor body portion 34b is positioned inside the case 36. Thus, the coupling member 34d is supported by the through hole H3. In other words, the distance sensor 34 is held by the case 36. In this case also, the distal end of the extension/contraction portion 34a is in direct contact with the corresponding axle box.

When the distal end of the extension/contraction portion 34a is in direct contact with the axle box, a contact surface of the axle box with which this distal end is in direct contact may be mirror-finished. The surface roughness of the contact surface may be equal to or smaller than Ra 1.6, for example. In this case, the extension/contraction portion 34a can easily slide on the contact surface. Thus, the extension/contraction portion 34a follows the movement of the axle box to extend and contract more accurately, whereby the gap between the pair of rolls can be detected with higher accuracy.

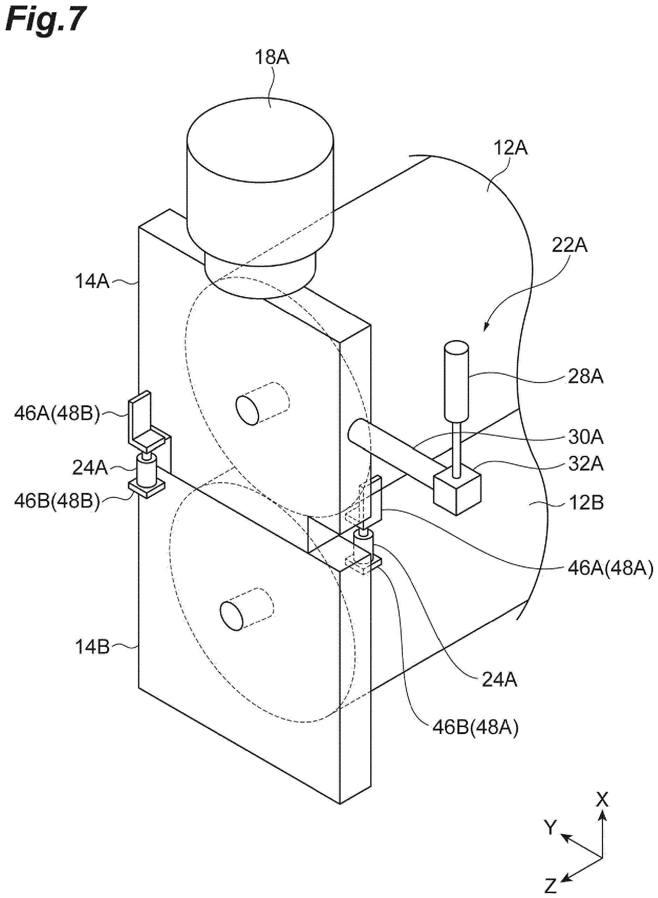

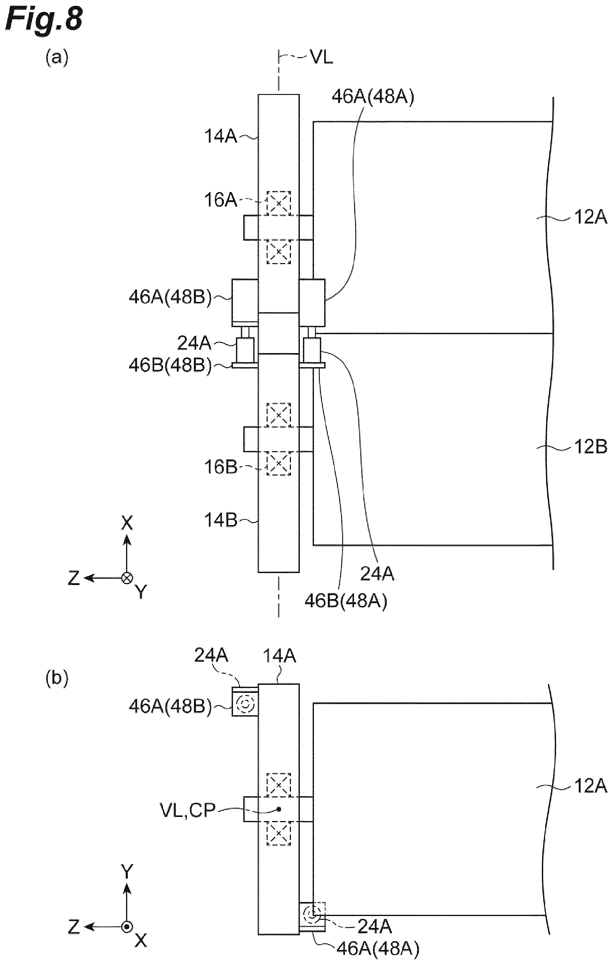

As depicted in FIG. 7 and FIG. 8, the axle boxes 14A and 14B may have fixtures 46A and 46B, respectively, and each sensor unit 24A may be interposed between the axle boxes 14A and 14B and be in contact with both of the axle boxes 14A and 14B via the respective fixtures 46A and 46B that are parts of the axle boxes 14A and 14B. In the same manner, other sensor units 24B and 24D may be attached to the axle boxes 14C and 14D, respectively, via fixtures. The following mainly describes the axle boxes 14A and 14B and a relation between the axle boxes 14A and 14B and the fixtures 46A and 46B.

In a configuration of FIG. 7 and FIG. 8, two fixtures 46A are provided to the axle box 14A, and two fixtures 46B are provided to the axle box 14B. One fixture 46A is positioned on an inner side surface of the side surfaces of the axle box 14A, the inner side surface facing the rolls 12A and 12B. The other fixture 46A is positioned on an outer side surface of the side surfaces of the axle box 14A, the outer side surface being opposed to the inner side surface and facing the outside. These fixtures 46A may be disposed in positions that are substantially symmetrical about the central point CP of the bearings 16A and 16B when viewed from the X direction (extending direction of the virtual straight line VL) (see FIG. 8(b)). Each fixture 46A may be an L-shaped metal plate having a thickness of about 2 mm to 3 mm, for example.

One fixture 46B is positioned on an inner side surface of side surfaces of the axle box 14B, the inner side surface facing the rolls 12A and 12B, and is opposed to the one fixture 46A positioned on the inner side surface of the axle box 14A. The one fixture 46B and the one fixture 46A constitute a holding member 48A. The other fixture 46B is positioned on an outer side surface of the side surfaces of the axle box 14B, the outer side surface being opposed to the inner side surface and facing the outside, and is opposed to the fixture 46A positioned on the outer side surface of the axle box 14A. The other fixture 46B and the other fixture 46A constitute a holding member 48B. Each fixture 46B may be a rectangular metal plate having a thickness of about 2 mm to 3 mm, for example.

Each of the holding members 48A and 48B holds one sensor unit 24A. The case 36 of each sensor unit 24A may be in contact with the corresponding fixture 46A, and the case 38 thereof may be in contact with the corresponding fixture 46B. Alternatively, these cases may be in contact with the respective fixtures inversely. The respective sensor units 24A held by the holding members 48A and 48B may be disposed in positions that are substantially symmetrical about the central point CP of the bearings 16A and 16B when viewed from the X direction (extending direction of the virtual straight line VL) (see FIG. 8(b)). When each sensor unit 24A does not include the case 38 in the same manner as in a modified example described above and the distal end of the extension/contraction portion 34a is in direct contact with the fixture 46A or the fixture 46B, the surface roughness of a contact surface of the fixtures 46A and 46B with which this distal end is in contact may be equal to or smaller than Ra 1.6, for example.

The above-described fixtures 46A and 46B may be initially provided to the axle boxes 14A and 14B when the calender 1 is newly manufactured. Alternatively, the fixtures 46A and 46B may be provided to the axle boxes 14A and 14B when modification work for attaching the sensor unit 24A to a currently used calender 1 whose axle boxes do not include the fixtures 46A and 46B is performed. In this modification work, to begin with, the fixtures 46A and 46B are provided at predetermined positions of the axle boxes 14A and 14B. Subsequently, the sensor unit 24A is interposed between the fixtures 46A and 46B such that the sensor unit 24A is in contact with the respective fixtures 46A and 46B and the extension/contraction portion 34a extends and contracts in one direction (X direction direction) in which the axle boxes 14A and 14B are aligned. Subsequently, settings of the control unit 26 are changed, and predetermined control performed by the control unit 26 is started. Specifically, changing of the settings causes the control unit 26 to perform processes of receiving a signal from the distance sensor 34, the signal being measured by the distance sensor 34 and indicating the gap between the rolls 12A and 12B, and controlling the hydraulic cylinder 18A such that the gap becomes constant. By the above-described work, modification of the calender 1 is completed.

As described above, when the sensor unit 24A is interposed between the axle boxes 14A and 14B via the fixtures 46A and 46B such that the sensor unit 24A is in contact with both of the axle boxes 14A and 14B, the sensor unit 24A can be attached at a desired position depending on positions of the fixtures 46A and 46B with respect to the axle boxes 14A and 14B. Thus, the sensor unit 24A can be accessed more easily than when the sensor unit 24A is positioned between the axle boxes 14A and 14B. Thus, operations such as maintenance, attachment (modification work of the calender 1), and removal of the sensor unit 24A can be easily performed.

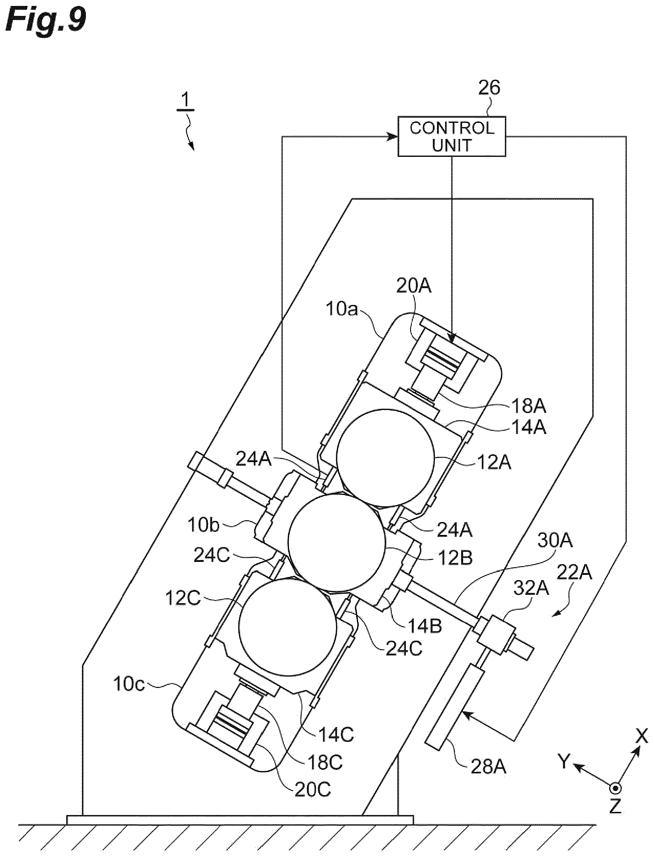

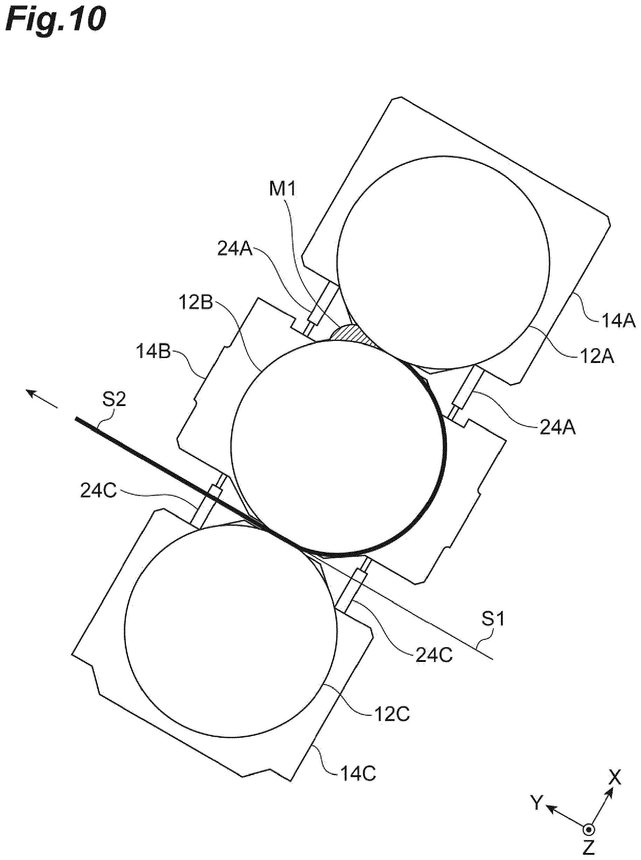

Although the calender 1 includes four rolls 12A to 12D in the above-described embodiment, the calender 1 may include three rolls 12A to 12C as depicted in FIG. 9 and FIG. 10. The following describes a configuration of a calender 1 according to a modified example, focusing on differences from the calender 1 according to the above-described embodiment.

The calender 1 includes a frame 10, rolls 12A to 12C, axle boxes 14A to 14C, hydraulic cylinders (adjustment units) 18A and 18C, a roll-cross mechanism 22A, sensor units (measuring means) 24A and 24C, and a control unit (controller) 26.

The frame 10 has openings 10a to 10c. The openings 10a to 10c are aligned in a row along an X direction inclined with respect to the floor when viewed from the side. The openings 10a and 10c extend along the X direction on the same straight line. The opening 10b extends along a Y direction orthogonal to the X direction when viewed from the side. The opening 10b crosses the openings 10a and 10c.

The roll 12A is disposed within the opening 10a. A pair of the axle boxes 14A is attached to the frame 10 via a slider (not depicted) within the opening 10a. This allows the roll 12A to move in the extending direction of the opening 10a (X direction) within the opening 10a.

The roll 12B is disposed within the opening 10b. A pair of the axle boxes 14B is attached to the frame 10 via a slider (not depicted) within the opening 10b. This allows the roll 12B to move in the extending direction of the opening 10b (Y direction) within the opening 10b. The pair of axle boxes 14B is adjacent to the pair of axle boxes 14A in the X direction.

The roll 12C is disposed within the opening 10c. A pair of the axle boxes 14C is attached to the frame 10 via a slider (not depicted) within the opening 10c. This allows the roll 12C to move in the extending direction of the opening 10c (X direction) within the opening 10c. The pair of axle boxes 14C is adjacent to the pair of the axle boxes 14B in the X direction.

The hydraulic cylinder 18C is attached to the frame 10 via a housing 20C. The hydraulic cylinder 18C is positioned at an end part of the opening 10c, the end part being distant from the openings 10a and 10b in the X direction. A piston of the hydraulic cylinder 18C is connected to an end edge of the axle box 14C, the end edge being positioned on a side opposite to the axle box 14B in the X direction. The hydraulic cylinder 18C pushes and pulls the roll 12C in the X direction via the axle box 14C on the basis of a signal from the control unit 26.

A distal end of a shaft 30A of the roll-cross mechanism 22A is connected to a side edge of the axle box 14B, the side edge extending in the X direction. Thus, based on a signal from the control unit 26, the motor 28A moves the shaft 30A forward and backward in the Y direction to push and pull the axle box 14B in the Y direction. Consequently, when viewed from a direction in which the adjacent rolls 12A, 12B, and 12C are aligned (X direction), the roll 12B is inclined by a predetermined angle with respect to the rolls 12A and 12C.

The sensor unit 24C is interposed between the axle box 14B and the axle box 14C, and in contact with both of the axle boxes 14B and 14C. Two sensor units 24C are disposed between the axle box 14B and the axle box 14C so as to be aligned in the Y direction. The two sensor units 24C are disposed such that a virtual straight line connecting the shaft of the roll 12B and the shaft of the roll 12C is positioned between the two sensor units 24C. The two sensor units 24C are disposed in positions that are substantially symmetrical about a central point of respective bearings incorporated in the axle boxes 14B and 14C when viewed from the X direction. The positions where the two sensor units 24C are disposed are also positions that are substantially symmetrical about a line of the shafts of the rolls 12B and 12C. The configuration of the sensor unit 24C is the same as that of the sensor unit 24A.

The control unit 26 controls the calender 1 to roll, with the rolls 12B and 12C, a sheet-like substrate S1 together with a material M1 supplied between the rolls 12A and 12B, thereby causing the calender 1 to manufacture a sheet-like product S2 in which a film of the material M1 is formed on one surface of the substrate S1 (see FIG. 10). At this time, based on a signal from the distance sensor 34, the control unit 26 controls the respective hydraulic cylinders 18A and 18C such that the gap between the adjacent rolls 12A and 12B and the gap between the adjacent rolls 12B and 12C become constant.

Although the above-described sensor units 24A to 24D (measuring means) are contact-type sensors that are in contact with axle boxes, noncontact-type distance sensor (e.g., laser displacement meters, eddy-current type displacement sensors, ultrasonic distance sensors) may be used to measure gaps between adjacent axle boxes (gaps between adjacent rolls).

Although the calender 1 has been described in the embodiment above, the present invention can be widely applied to a rolling device configured to roll a material with a pair of adjacent rolls.

### Reference Signs List

- 1: calender
- 12A to 12D: roll
- 14A to 14D: axle box
- 16A: bearing (first bearing)
- 16B: bearing (second bearing)
- 18A to 18D: hydraulic cylinder (adjustment unit)
- 22A, 22D: roll-cross mechanism
- 24A to 24D: sensor unit (measuring means)
- 26: control unit (controller)
- 34: distance sensor
- 34a: extension/contraction portion
- 34b: sensor body portion
- 36: case (first member)
- 36a: inner cylindrical portion
- 36b: bottom wall
- 38: case (second member)
- 38a: cylindrical portion
- 38b: bottom wall
- CP: central point
- H1: through hole (supply means)
- F2: outer surface
- VL: virtual straight line

## Claims

1. A rolling device (1) comprising:
first and second rolls (12A, 12B) adjacent to each other;
a first axle box (14A) rotatably supporting a shaft of the first roll (12A);
a second axle box (14B) rotatably supporting a shaft of the second roll (12B) and adjacent to the first axle box (14A);
an adjustment unit (18A) configured to adjust a position of the first axle box (14A) so as to move the first roll (12A) toward the second roll (12B) or to separate the first roll (12A) from the second roll (12B);
at least one sensor unit (24A) interposed between the first axle box (14A) and the second axle box (14B) and being in contact with both of the axle boxes (14A, 14B); and
a controller (26),
wherein the sensor unit (24A) includes a distance sensor (34) including an extension/contraction portion (34a) configured to extend and contract in one direction (X) in which the first and second axle boxes (14A, 14B) are aligned,
wherein the controller (26) is configured to control the adjustment unit (18A) based on an extension/contraction amount of the extension/contraction portion (34a),
wherein the at least one sensor unit (24A) includes two sensor units (24A),
wherein the shaft of the first roll (12A) is rotatably supported by a first bearing (16A) incorporated in the first axle box (14A), and
wherein the shaft of the second roll (12B) is rotatably supported by a second bearing (16B) incorporated in the second axle box (14B), and
**characterized in that** the two sensor units (24A) are disposed in positions that are substantially symmetrical about a central point (CP) of the first and second bearings (16A, 16B) when viewed from the one direction (X).

2. The rolling device (1) according to claim 1,
wherein the two sensor units (24A) are disposed such that a virtual straight line (VL) connecting the shaft of the first roll (12A) and the shaft of the second roll (12B) is positioned between the two sensor units (24A).

3. The rolling device (1) according to claim 1 or 2,
wherein the sensor unit (24A) further includes:
a first member (36) holding the distance sensor (34); and,
a second member (38) abutting on the extension/contraction portion (34a) and attached to the first member (36) slidably along the one direction (X).

4. The rolling device (1) according to claim 3,
wherein one of the first and second members (36, 38) is fixed to one of the first and second axle boxes (14A, 14B), and
wherein the other of the first and second members (36, 38) is not fixed to the other of the first and second axle boxes (14A, 14B), and has a contact surface that is movable within a surface of the other of the first and second axle boxes (14A, 14B) while abutting on this surface.

5. The rolling device (1) according to claim 1 or 2, wherein surface roughness of a contact surface of the first and second axle boxes (14A, 14B), the contact surface being in contact with the extension/contraction portion (34a), is equal to or smaller than Ra 1.6.

6. The rolling device (1) according to any one of claims 1 to 5, wherein the sensor unit (24A) further includes a supply path (H1, H2) for supplying cooling gas to the distance sensor (34).

7. The rolling device (1) according to any one of claims 1 to 6,
wherein the first axle box (14A) and the second axle box (14B) each have a fixture (46A, 46B), and
wherein the sensor unit (24A) is interposed between the first and second axle boxes (14A, 14B) and is in contact with both of the axle boxes via the respective fixtures (46A, 46B) of the first axle box (14A) and the second axle box (14B).

8. The rolling device (1) according to any one of claims 1 to 7, wherein a distal end of the extension/contraction portion (34a) has a spherical shape.

9. A modification method for a rolling device (1) that includes: first and second rolls (12A, 12B) adjacent to each other; a first axle box (14A) rotatably supporting a shaft of the first roll (12A); a second axle box (14B) rotatably supporting a shaft of the second roll (12B) and adjacent to the first axle box (14A); a first bearing (16A) incorporated in the first axle box (14A) to rotatably support the shaft of the first roll (12A); a second bearing (16B) incorporated in the second axle box (14B) to support the shaft of the second roll (12B); an adjustment unit (18A) configured to adjust a position of the first axle box (14A) so as to move the first roll (12A) toward the second roll (12B) or to separate the first roll (12A) from the second roll (12B); and a controller (26) configured to control the adjustment unit (18A), the method comprising:
providing a first fixture (46A) and a second fixture (46A) to the first axle box (14A);
providing a third fixture (46B) and a fourth fixture (46B) to the second axle box (14B);
interposing a first sensor unit (24A) between the first fixture (46A) and the third fixture (46B) such that the first sensor unit (24A) is in contact with the first fixture (46A) and the third fixture (46B) and an extension/contraction portion (34a) included in the first sensor unit (24A) extends and contracts in one direction (X) in which the first and second axle boxes (14A, 14B) are aligned;
interposing a second sensor unit (24A) between the second fixture (46A) and the fourth fixture (46B) such that the first sensor unit (24A) is in contact with the second fixture (46A) and the fourth fixture (46B) and an extension/contraction portion (34a) included in the second sensor unit (24A) extends and contracts in the one direction (X); and
causing the controller (26) to perform a process of controlling the adjustment unit (18A) based on an extension/contraction amount of the extension/contraction portion (34a),
**characterized in that** the first sensor unit (24A) and the second sensor unit (24A) are disposed in positions that are substantially symmetrical about a central point (CP) of the first and second bearings (14A, 14B) when viewed from the one direction (X).

## Patentansprüche

1. Walzvorrichtung (1), umfassend:
eine erste und eine zweite Walze (12A, 12B), die angrenzend zueinander sind;
ein erstes Achslager (14A), das eine Welle der ersten Walze (12A) drehbar stützt;
ein zweites Achslager (14B), das eine Welle der zweiten Walze (12B) drehbar stützt und angrenzend zu dem ersten Achslager (14A) ist;
eine Einstelleinheit (18A), die konfiguriert ist, um eine Position des ersten Achslagers (14A) einzustellen, um so die erste Walze (12A) in Richtung der zweiten Walze (12B) zu bewegen oder die erste Walze (12A) von der zweiten Walze (12B) zu trennen;
mindestens eine Sensoreinheit (24A), die zwischen dem ersten Achslager (14A) und dem zweiten Achslager (14B) angeordnet ist und mit beiden Achslagern (14A, 14B) in Kontakt steht; und
eine Steuerung (26),
wobei die Sensoreinheit (24A) einen Abstandssensor (34) mit einem Ausdehnungs-/Kontraktionsabschnitt (34a) aufweist, der konfiguriert ist, um sich in einer Richtung (X) auszudehnen und zu kontrahieren, in der das erste und das zweite Achslager (14A, 14B) ausgerichtet sind,
wobei die Steuerung (26) konfiguriert ist, um die Einstelleinheit (18A) auf der Grundlage eines Ausdehnungs-/Kontraktionsbetrags des Ausdehnungs-/Kontraktionsabschnitts (34a) zu steuern,
wobei die mindestens eine Sensoreinheit (24A) zwei Sensoreinheiten (24A) einschließt,
wobei die Welle der ersten Walze (12A) drehbar durch ein erstes Lager (16A) gestützt wird, das in das erste Achslager (14A) eingebaut ist, und
wobei die Welle der zweiten Walze (12B) durch ein zweites Lager (16B) drehbar gestützt wird, das in das zweite Achslager (14B) eingebaut ist, und
**dadurch gekennzeichnet, dass** die zwei Sensoreinheiten (24A) in Positionen angeordnet sind, die aus der einen Richtung (X) gesehen im Wesentlichen symmetrisch um einen zentralen Punkt (CP) des ersten und zweiten Lagers (16A, 16B) angeordnet sind.

2. Walzvorrichtung (1) nach Anspruch 1,
wobei die zwei Sensoreinheiten (24A) so angeordnet sind, dass eine virtuelle gerade Linie (VL), die die Welle der ersten Walze (12A) und die Welle der zweiten Walze (12B) verbindet, zwischen den zwei Sensoreinheiten (24A) positioniert ist.

3. Walzvorrichtung (1) nach Anspruch 1 oder 2,
wobei die Sensoreinheit (24A) ferner Folgendes einschließt:
ein erstes Element (36), das den Abstandssensor (34) hält; und,
ein zweites Element (38), das an dem Ausdehnungs-/Kontraktionsabschnitt (34a) anliegt und an dem ersten Element (36) entlang der einen Richtung (X) verschiebbar angebracht ist.

4. Walzvorrichtung (1) nach Anspruch 3,
wobei eines des ersten und des zweiten Elements (36, 38) an einem des ersten und des zweiten Achslagers (14A, 14B) befestigt ist, und
wobei das andere des ersten und des zweiten Elements (36, 38) nicht an dem anderen des ersten und des zweiten Achslagers (14A, 14B) befestigt ist, und eine Kontaktfläche aufweist, die innerhalb einer Oberfläche des anderen des ersten und des zweiten Achslagers (14A, 14B) beweglich ist, während sie an dieser Oberfläche anliegt.

5. Walzvorrichtung (1) nach Anspruch 1 oder 2, wobei eine Oberflächenrauhigkeit einer Kontaktfläche des ersten und des zweiten Achslagers (14A, 14B), wobei die Kontaktfläche in Kontakt mit dem Ausdehnungs-/Kontraktionsabschnitt (34a) steht, gleich oder kleiner als Ra 1,6 ist.

6. Walzvorrichtung (1) nach einem der Ansprüche 1 bis 5, wobei die Sensoreinheit (24A) ferner einen Zuführungsweg (H1, H2) zur Zufuhr von Kühlgas zu dem Abstandssensor (34) aufweist.

7. Walzvorrichtung (1) nach einem der Ansprüche 1 bis 6,
wobei das erste Achslager (14A) und das zweite Achslager (14B) jeweils eine Halterung (46A, 46B) aufweisen, und
wobei die Sensoreinheit (24A) zwischen dem ersten und dem zweiten Achslager (14A, 14B) angeordnet ist und über die jeweiligen Halterungen (46A, 46B) des ersten Achslagers (14A) und des zweiten Achslagers (14B) mit beiden Achslagern in Kontakt steht.

8. Walzvorrichtung (1) nach einem der Ansprüche 1 bis 7, wobei ein distales Ende des Ausdehnungs-/Kontraktionsabschnitts (34a) eine sphärische Form aufweist.

9. Modifikationsverfahren für eine Walzvorrichtung (1), die Folgendes einschließt:
eine erste und eine zweite Walze (12A, 12B), die angrenzend zueinander sind; ein erstes Achslager (14A), das eine Welle der ersten Walze (12A) drehbar stützt; ein zweites Achslager (14B), das eine Welle der zweiten Walze (12B) drehbar stützt und angrenzend an das erste Achslager (14A) ist; ein erstes Lager (16A), das in das erste Achslager (14A) eingebaut ist, um die Welle der ersten Walze (12A) drehbar zu stützen; ein zweites Lager (16B), das in das zweite Achslager (14B) eingebaut ist, um die Welle der zweiten Walze (12B) zu stützen; eine Einstelleinheit (18A), die konfiguriert ist, um eine Position des ersten Achslagers (14A) einzustellen, um die erste Walze (12A) in Richtung der zweiten Walze (12B) zu bewegen oder um die erste Walze (12A) von der zweiten Walze (12B) zu trennen; und eine Steuerung (26), die konfiguriert ist, um die Einstelleinheit (18A) zu steuern, wobei das Verfahren umfasst:
Bereitstellen einer ersten Halterung (46A) und einer zweiten Halterung (46A) an dem ersten Achslager (14A);
Bereitstellen einer dritten Halterung (46B) und einer vierten Halterung (46B) an dem zweiten Achslager (14B);
Anordnen einer ersten Sensoreinheit (24A) zwischen der ersten Halterung (46A) und der dritten Halterung (46B), so dass die erste Sensoreinheit (24A) mit der ersten Halterung (46A) und der dritten Halterung (46B) in Kontakt steht und ein in der ersten Sensoreinheit (24A) eingeschlossener Ausdehnungs-/Kontraktionsabschnitt (34a) sich in einer Richtung (X) ausdehnt und kontrahiert, in der das erste und das zweite Achslager (14A, 14B) ausgerichtet sind;
Anordnen einer zweiten Sensoreinheit (24A) zwischen der zweiten Halterung (46A) und der vierten Halterung (46B), so dass die erste Sensoreinheit (24A) mit der zweiten Halterung (46A) und der vierten Halterung (46B) in Kontakt ist und ein in der zweiten Sensoreinheit (24A) eingeschlossener Ausdehnungs-/Kontraktionsabschnitt (34a) sich in der einen Richtung (X) ausdehnt und kontrahiert; und
Veranlassen der Steuerung (26), einen Prozess zum Steuern der Einstelleinheit (18A) auf der Grundlage eines Ausdehnungs-/Kontraktionsbetrags des Ausdehnungs-/Kontraktionsabschnitts (34a) durchzuführen,
**dadurch gekennzeichnet, dass** die erste Sensoreinheit (24A) und die zweite Sensoreinheit (24A) an Positionen angeordnet sind, die im Wesentlichen symmetrisch um einen zentralen Punkt (CP) des ersten und des zweiten Lagers (14A, 14B) aus der einen Richtung (X) gesehen sind.

## Revendications

1. Dispositif de laminage (1) comprenant :
des premier et deuxième cylindres (12A, 12B) adjacents l'un à l'autre ;
une première boîte d'essieu (14A) supportant de manière rotative un arbre du premier cylindre (12A) ;
une deuxième boîte d'essieu (14B) supportant de manière rotative un arbre du deuxième cylindre (12B) et adjacente à la première boîte d'essieu (14A) ;
une unité de réglage (18A) configurée pour régler une position de la première boîte d'essieu (14A) de façon à rapprocher le premier cylindre (12A) du deuxième cylindre (12B) ou à séparer le premier cylindre (12A) du deuxième cylindre (12B) ;
au moins une unité de détection (24A) intercalée entre la première boîte d'essieu (14A) et la deuxième boîte d'essieu (14B) et en contact avec les deux boîtes d'essieu (14A, 14B) ; et
un organe de commande (26) ;
dans lequel l'unité de détection (24A) comporte un capteur de distance (34) comportant une partie d'extension/contraction (34a) configurée pour s'étendre et se contracter dans une direction (X) dans laquelle les première et deuxième boîtes d'essieu (14A, 14B) sont alignées,
dans lequel l'organe de commande (26) est configuré pour commander l'unité de réglage (18A) en fonction de la quantité d'extension/contraction de la partie d'extension/contraction (34a),
dans lequel l'au moins une unité de détection (24A) inclut deux unités de détection (24A),
dans lequel l'arbre du premier cylindre (12A) est supporté de manière rotative par un premier coussinet (16A) incorporé dans la première boîte d'essieu (14A), et
dans lequel l'arbre du deuxième cylindre (12B) est supporté de manière rotative par un deuxième coussinet (16B) incorporé dans la deuxième boîte d'essieu (14B), et
**caractérisé en ce que** les deux unités de détection (24A) sont disposées en des positions qui sont sensiblement symétriques autour d'un point central (CP) des premier et deuxième coussinets (16A, 16B), vu selon ladite direction (X).

2. Dispositif de laminage (1) selon la revendication 1,
dans lequel les deux unités de détection (24A) sont disposées de telle façon qu'une droite virtuelle (VL) reliant l'arbre du premier cylindre (12A) à l'arbre du deuxième cylindre (12B) est positionnée entre les deux unités de détection (24A).

3. Dispositif de laminage (1) selon la revendication 1 ou 2,
dans lequel l'unité de détection (24A) inclut en outre :
un premier élément (36) retenant le capteur de distance (34) ; et
un deuxième élément (38) en appui contre la partie d'extension/contraction (34a) et monté coulissant sur le premier élément (36) le long de ladite direction (X).

4. Dispositif de laminage (1) selon la revendication 3,
dans lequel l'un des premier et deuxième éléments (36, 38) est fixé à l'une des première et deuxième boîtes d'essieu (14A, 14B), et
dans lequel l'autre des premier et deuxième éléments (36, 38) n'est pas fixé à l'autre des première et deuxième boîtes d'essieu (14A, 14B), et a une surface de contact qui est déplaçable au sein d'une surface de l'autre des première et deuxième boîtes d'essieu (14A, 14B) tout en étant en appui sur cette surface.

5. Dispositif de laminage (1) selon la revendication 1 ou 2, dans lequel une rugosité de surface d'une surface de contact des première et deuxième boîtes d'essieu (14A, 14B), la surface de contact étant en contact avec la partie d'extension/contraction (34a), est inférieure ou égale à Ra 1,6.

6. Dispositif de laminage (1) selon l'une quelconque des revendications 1 à 5, dans lequel l'unité de détection (24A) comporte en outre une voie d'apport (H1, H2) pour alimenter le capteur de distance (34) avec un gaz de refroidissement.

7. Dispositif de laminage (1) selon l'une quelconque des revendications 1 à 6,
dans lequel la première boîte d'essieu (14A) et la deuxième boîte d'essieu (14B) ont chacune un organe de fixation (46A, 46B), et
dans lequel l'unité de détection (24A) est intercalée entre les première et deuxième boîtes d'essieu (14A, 14B) et est en contact avec les deux boîtes d'essieu par l'intermédiaire des organes de fixation (46A, 46B) respectifs de la première boîte d'essieu (14A) et de la deuxième boîte d'essieu (14B).

8. Dispositif de laminage (1) selon l'une quelconque des revendications 1 à 7, dans lequel une extrémité distale de la partie d'extension/contraction (34a) a une forme sphérique.

9. Procédé de modification destiné à un dispositif de laminage (1) qui inclut :
des premier et deuxième cylindres (12A, 12B) adjacents l'un à l'autre ; une première boîte d'essieu (14A) supportant de manière rotative un arbre du premier cylindre (12A) ; une deuxième boîte d'essieu (14B) supportant de manière rotative un arbre du deuxième cylindre (12B) et adjacente à la première boîte d'essieu (14A) ; un premier coussinet (16A) incorporé dans la première boîte d'essieu (14A) pour supporter de manière rotative l'arbre du premier cylindre (12A) ; un deuxième coussinet (16B) incorporé dans la deuxième boîte d'essieu (14B) pour supporter l'arbre du deuxième cylindre (12B) ; une unité de réglage (18A) configurée pour régler la position de la première boîte d'essieu (14A) de façon à rapprocher le premier cylindre (12A) du deuxième cylindre (12B) ou à séparer le premier cylindre (12A) du deuxième cylindre (12B) ; et un organe de commande (26) configuré pour commander l'unité de réglage (18A), le procédé comprenant les opérations consistant à :
fournir un premier organe de fixation (46A) et un deuxième organe de fixation (46A) sur la première boîte d'essieu (14A) ;
fournir un troisième organe de fixation (46B) et un quatrième organe de fixation (46B) sur la deuxième boîte d'essieu (14B) ;
intercaler une première unité de détection (24A) entre le premier organe de fixation (46A) et le troisième organe de fixation (46B) de telle façon que la première unité de détection (24A) soit en contact avec le premier organe de fixation (46A) et le troisième organe de fixation (46B) et qu'une partie d'extension/contraction (34a) présente dans la première unité de détection (24A) s'étende et se contracte dans une direction (X) dans laquelle les première et deuxième boîtes d'essieu (14A, 14B) sont alignées ;
intercaler une deuxième unité de détection (24A) entre le deuxième organe de fixation (46A) et le quatrième organe de fixation (46B) de telle façon que la première unité de détection (24A) soit en contact avec le deuxième organe de fixation (46A) et le quatrième organe de fixation (46B) et qu'une partie d'extension/contraction (34a) présente dans la deuxième unité de détection (24A) s'étende et se contracte dans ladite direction (X) ; et
amener l'organe de commande (26) à réaliser un processus de commande de l'unité de réglage (18A) en fonction de la quantité d'extension/contraction de la partie d'extension/contraction (34a),
**caractérisé en ce que** la première unité de détection (24A) et la deuxième unité de détection (24A) sont disposées en des positions qui sont sensiblement symétriques par rapport à un point central (CP) des premier et deuxième coussinets (14A, 14B), vu selon ladite direction (X).
